# EUROPEAN PATENT APPLICATION

(11) **EP 4 841 868 A1**
(43) Date of publication of application: **18.11.2026**
(21) Application number: 24916953.3
(22) Date of filing: 26.12.2024
(51) Int. Cl.: H02K 19/26

(54) **WOUND FIELD ROTOR**

(30) Priority: 09.01.2024 JP 2024001409
(71) Applicant: DENSO CORPORATION, Kariya-city, Aichi 448-8661 (JP)
(72) Inventor: YOSHIMURA, Masataka, Kariya- city, Aichi 4488661 (JP)
(74) Representative: Kuhnen & Wacker Patent- und Rechtsanwaltsbüro PartG mbB
(86) International application number: PCT/JP2024/046259
(87) International publication number: WO 2025/150452

(57) **Abstract**

A rotor (60) includes a rotor core (61), a field coil (70) wound on the rotor core, and a circuit module (102) arranged on one axial side of the rotor core and including electrical components connected with the field coil. Moreover, the circuit module further includes a component holder (130) that holds the electrical components. The component holder has: a fixedly-fitted part (134a) fixedly fitted, with an interference, to a rotating member that is either a shaft portion (32) of the rotor core or an annular member configured to rotate together with the shaft portion; and a component accommodation part (136, 142) located radially outside or radially inside the fixedly-fitted part and accommodating the electrical components therein. Furthermore, between the fixedly-fitted part and the component accommodation part in the component holder, there is provided a strain absorption portion (151, 152, 161, 162) configured to absorb radial strain caused by the interference.

## Description

### [CROSS-REFERENCE TO RELATED APPLICATION]

The present application is based on Japanese Patent Application No. 2024-001409 filed on January 9, 2024, the contents of which are incorporated by reference into the present application.

### [TECHNICAL FIELD]

The disclosure in this description relates to wound-field rotors used in wound-field rotating electric machines.

### [BACKGROUND ART]

In a wound-field rotating electrical machine, a rotor includes a rotor core having a plurality of main pole portions (or magnetic salient pole portions) arranged in a circumferential direction, and a field coil wound on the main pole portions. Moreover, a configuration of the rotor has been known in which: a component holder accommodates therein electrical components connected with the field coil; and the component holder is fixed at an axial end of the rotor so as to be rotatable together with the rotor (see, for example, Patent Document 1).

### [PRIOR ART LITERATURE]

### [PATENT LITERATURE]

[Patent Document 1]: Japanese Unexamined Patent Application Publication No. JP 2020-124100 A

### [SUMMARY OF THE INVENTION]

In a rotor, to reduce weight imbalance, it is desirable to reliably bring a component holder into contact with a rotating shaft. To this end, a configuration may be considered in which the component holder is fixedly fitted to the rotating shaft by press fitting or the like with a predetermined interference. However, with the configuration in which the component holder is fixedly fitted to the rotating shaft with the interference, strain may occur in a fixedly-fitted part of the component holder due to the interference, thereby causing problems, such as positional displacement and/or damage to the electrical components, to occur.

The present disclosure has been accomplished in view of the above circumstances. It is, therefore, an object of the present disclosure to provide a wound-field rotor capable of holding electrical components in an appropriate state in a component holder.

According to the present disclosure, there is provided a wound-field rotor comprising:
a rotor core;
a field coil wound on the rotor core; and
a circuit module arranged on one axial side of the rotor core and including electrical components connected with the field coil,
wherein:
   the circuit module further includes a component holder that holds the electrical components;
   the component holder has
      a fixedly-fitted part fixedly fitted, with an interference, to a rotating member that is either a shaft portion of the rotor core or an annular member configured to rotate together with the shaft portion, and
      a component accommodation part located radially outside or radially inside the fixedly-fitted part and accommodating the electrical components therein; and
   between the fixedly-fitted part and the component accommodation part in the component holder, there is provided a strain absorption portion configured to absorb radial strain caused by the interference.

In the circuit module of the wound-field rotor, with the configuration in which the component holder is fixedly fitted, with an interference, to the rotating member that is either the shaft portion of the rotor core or an annular member configured to rotate together with the shaft portion, strain may occur in the component holder due to radial stress caused by the interference; and the strain may affect the electrical components. In this regard, according to the present disclosure, between the fixedly-fitted part and the component accommodation part in the component holder, there is provided the strain absorption portion configured to absorb radial strain caused by the interference. Consequently, it becomes possible to suppress the strain from affecting the electrical components. As a result, it becomes possible to hold the electrical components in an appropriate state in the component holder.

### [BRIEF DESCRIPTION OF THE DRAWINGS]

The above-described object, other objects, features and beneficial advantages according to the present disclosure will become more apparent from the following detailed explanation with reference to the accompanying drawings. In the drawings:
FIG. 1 is an overall configuration diagram of a control system for a rotating electric machine according to an embodiment;
FIG. 2 is a diagram illustrating an inverter and its peripheral configuration;
FIG. 3 is a transverse cross-sectional view of both a rotor and a stator;
FIG. 4 is a diagram illustrating an electric circuit formed in the rotor;
FIG. 5 is a perspective view illustrating the overall configuration of the rotor;
FIG. 6 is an exploded perspective view of the rotor;
FIG. 7 is a longitudinal cross-sectional view of the rotor;
FIG. 8 is a perspective view of a rotor main body, showing a coil unit in a disassembled manner;
FIG. 9 is a transverse cross-sectional view of part of the rotor main body;
FIG. 10 is a perspective view of a circuit module;
FIG. 11 is a perspective view of a component holder;
FIG. 12 is a plan view of the circuit module;
FIG. 13 is a longitudinal cross-sectional view of the circuit module;
FIG. 14 is a diagram illustrating a connection structure of conductor wire end portions in a coil fixing part;
FIG. 15 is a plan view of a component holder according to a modification;
FIG. 16 is a plan view of a component holder according to another modification;
FIG. 17 is another plan view of the circuit module;
FIG. 18 is a plan view of a component holder according to another modification;
FIG. 19 is a longitudinal cross-sectional view of the component holder shown in FIG. 18;
FIG. 20 is a longitudinal cross-sectional view of a component holder according to another modification;
FIG. 21 is a plan view of a component holder according to another modification;
FIG. 22 is a longitudinal cross-sectional view of a component holder according to another modification; and
FIG. 23 is a plan view of a circuit module according to another modification.

### [EMBODIMENTS FOR CARRYING OUT THE INVENTION]

Hereinafter, an embodiment embodying a rotating electric machine according to the present disclosure will be described with reference to the drawings. The rotating electric machine may be used, for example, as a driving power source in an electrified vehicle such as an electric vehicle or a hybrid vehicle.

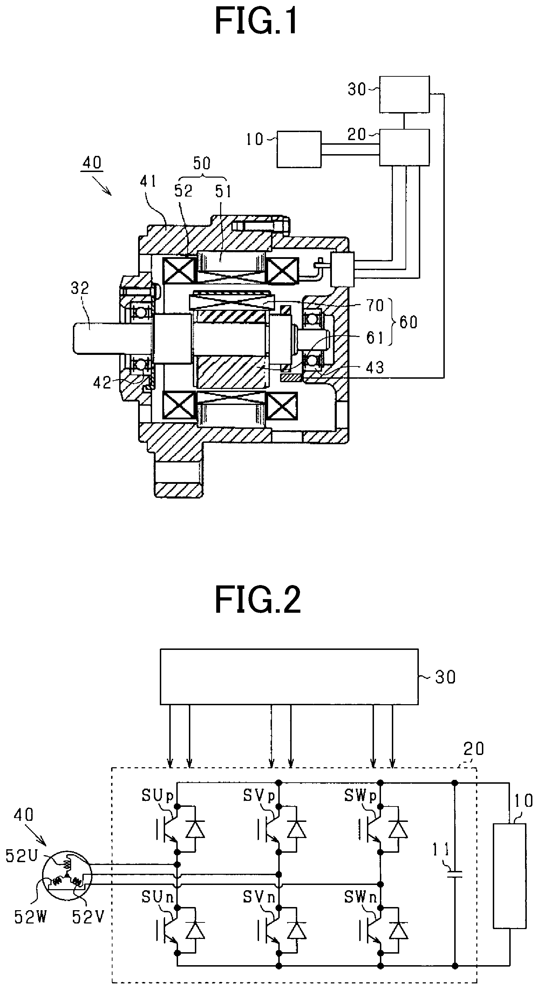

First, a control system, which includes the rotating electric machine, will be described with reference to FIG. 1. The control system includes a DC power source 10, an inverter 20 and a control apparatus 30, in addition to the rotating electric machine 40. The rotating electric machine 40 is configured as a wound-field synchronous rotating electric machine. In addition, the rotating electric machine 40, the inverter 20 and the control apparatus 30 may be either integrated into a single electromechanical drive apparatus or configured as individual components.

The rotating electric machine 40 includes a housing 41, and a stator 50 and a rotor 60 both of which are accommodated in the housing 41. In the present embodiment, the rotating electric machine 40 is of an inner rotor type such that the rotor 60 is arranged radially inside the stator 50.

The stator 50 includes a stator core 51 and a stator coil 52 wound on the stator core 51. The stator coil 52 may be formed of, for example, copper wires. The stator coil 52 includes a U-phase winding 52U, a V-phase winding 52V and a W-phase winding 52W, which are arranged in such a manner as to be offset from each other by 120° in electrical angle.

The rotor 60 includes a rotor core 61 and a field coil 70. The field coil 70 may be formed, for example, of aluminum wires that have a low specific gravity and can be easily deformed. It should be noted that the field coil 70 is not limited to aluminum wires, but may alternatively be formed of other materials, such as copper wires or CNTs (Carbon Nanotubes). The rotor core 61 has a center hole in which a rotating shaft 32 is fitted. The rotating shaft 32 is rotatably supported by the housing 41 via a pair of bearings 42 and 43.

As shown in FIG. 2, the inverter 20 includes: a U-phase series connection unit consisting of a U-phase upper-arm switch SUp and a U-phase lower-arm switch Sun that are connected in series with each other; a V-phase series connection unit consisting of a V-phase upper-arm switch SVp and a V-phase lower-arm switch SVn that are connected in series with each other; and a W-phase series connection unit consisting of a W-phase upper-arm switch SWp and a W-phase lower-arm switch SWn that are connected in series with each other. To a junction point between the U-phase upper-arm and lower-arm switches SUp and SUn, there is connected a first end of the U-phase winding 52U. To a junction point between the V-phase upper-arm and lower-arm switches SVp and SVn, there is connected a first end of the V-phase winding 52V. To a junction point between the W-phase upper-arm and lower-arm switches SWp and SWn, there is connected a first end of the W-phase winding 52W. On the other hand, a second end of the U-phase winding 52U, a second end of the V-phase winding 52V and a second end of the W-phase winding 52W are connected together at a neutral point. That is, in the present embodiment, the U-phase, V-phase and W-phase windings 52U, 52V and 52W of the stator coil 52 are star-connected. It should be noted that the U-phase, V-phase and W-phase windings 52U, 52V and 52W of the stator coil 52 may alternatively be delta-connected. Moreover, in the present embodiment, each of the switches SUp, SVp, SWp, SUn, SVn and SWn is implemented by an IGBT. In addition, each of the switches SUp, SVp, SWp, SUn, SVn and SWn has a freewheeling diode connected in antiparallel thereto.

Each of the U-phase, V-phase and W-phase upper-arm switches SUp, SVp and SWp has its collector connected to a positive electrode terminal of the DC power source 10. Each of the U-phase, V-phase and W-phase lower-arm switches SUn, SVn and SWn has its emitter connected to a negative electrode terminal of the DC power source 10. In addition, a smoothing capacitor 11 is connected in parallel with the DC power source 10.

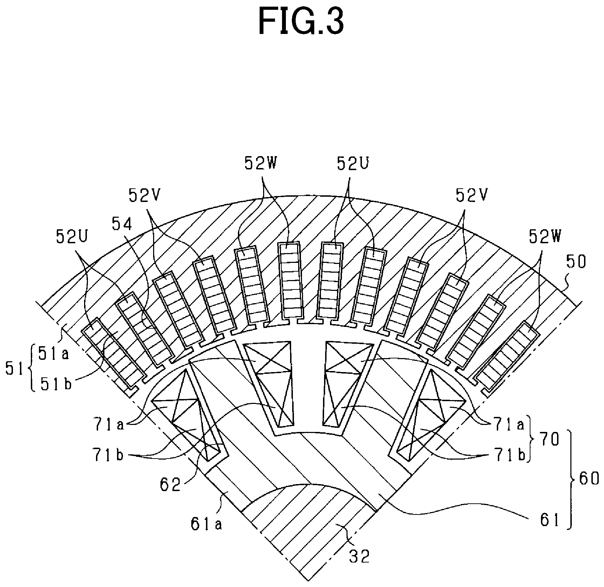

Next, the stator 50 and the rotor 60 will be described in detail with reference to FIG. 3.

In the rotating electric machine 40, both the stator 50 and the rotor 60 are arranged coaxially with the rotating shaft 32. Hereinafter, the direction in which a central axis of the rotating shaft 32 extends will be referred to as the axial direction; the directions of extending radially from the central axis of the rotating shaft 32 will be referred to as radial directions; and the direction of extending along a circle whose center is on the central axis of the rotating shaft 32 will be referred to as the circumferential direction.

The stator core 51 is formed of a soft-magnetic material. For example, the stator core 51 may be formed by laminating steel sheets in the axial direction. The stator core 51 has an annular back yoke 51a and a plurality of teeth 51b each protruding radially inward from the back yoke 51a. Between circumferentially adjacent teeth 51b, there are formed a plurality of slots 54 in alignment with each other in the circumferential direction. The stator coil 52 is formed by having the U-phase, V-phase and W-phase windings 52U, 52V and 52W accommodated in a predetermined order in the slots 54. The stator 50 may have, for example, a segment coil structure in which a plurality of electrical conductor segments are employed. It should be noted that the structure of the stator coil 52 may be arbitrarily selected.

The rotor core 61 is also formed of a soft-magnetic material. For example, the rotor core 61 may be formed by laminating steel sheets in the axial direction. The rotor core 61 has a cylindrical portion 61a and a plurality of main pole portions 62 protruding radially outward from the cylindrical portion 61a. The field coil 70 is wound on the main pole portions 62 in a concentrated winding manner. More particularly, in the present embodiment, the rotor core 61 has eight main pole portions 62 formed at equal intervals in the circumferential direction.

The field coil 70 includes a first coil section 71a and a second coil section 71b. On each of the main pole portions 62, the first coil section 71a is wound on the radially outer side while the second coil section 71b is wound on the radially inner side. Moreover, on each of the main pole portions 62, the first and second coil sections 71a and 71b are wound in the same direction. Furthermore, for each circumferentially-adjacent pair of the main pole portions 62, the winding direction of the first and second coil sections 71a and 71b on one of the pair of the main pole portions 62 is opposite to the winding direction of the first and second coil sections 71a and 71b on the other of the pair of the main pole portions 62. Consequently, the magnetization directions of each circumferentially-adjacent pair of the main pole portions 62 become opposite to each other. In the rotor 60, by the main pole portions 62 of the rotor core 61 and the field coil 70 wound on the main pole portions 62, a plurality of magnetic poles (or field poles) are formed which are aligned with each other in the circumferential direction.

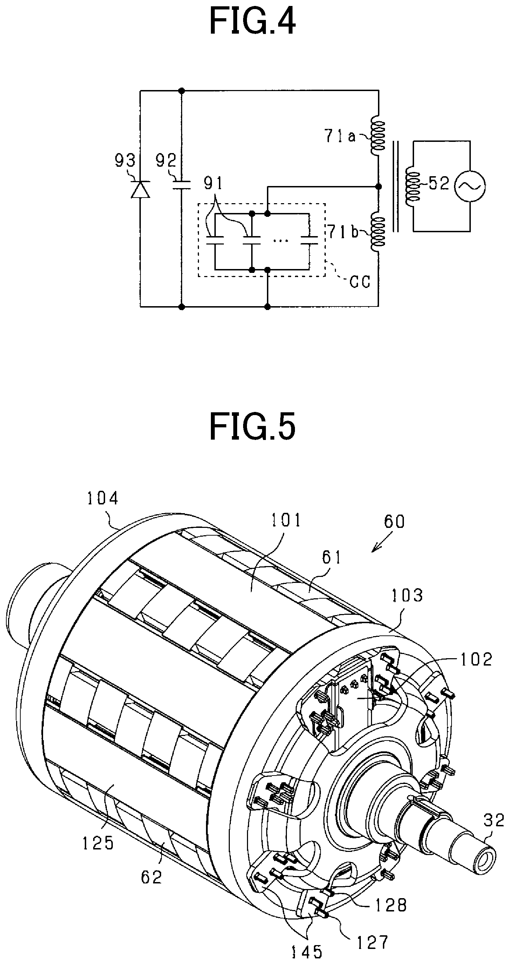

FIG. 4 shows an electric circuit which is formed in the rotor 60 and includes the first and second coil sections 71a and 71b wound on the main pole portions 62. The first coil section 71a and the second coil section 71b are connected in series with each other. A capacitor unit CC, which is constituted of a plurality of first capacitors 91, is connected in parallel with the second coil section 71b. More particularly, in the present embodiment, the capacitor unit CC is configured as a parallel connection unit of eleven first capacitors 91 that are connected in parallel with each other. Moreover, a second capacitor 92 is connected in parallel with the series connection unit consisting of the first coil section 71a and the second coil section 71b. The second capacitor 92 is provided for noise suppression. The first capacitors 91 and the second capacitor 92 have the same configuration and may be implemented by, for example, multilayer ceramic capacitors.

A diode 93, which serves as a rectifying element, is connected between two ends of the series connection unit consisting of the first and second coil sections 71a and 71b. Specifically, a first end of the first coil section 71a is connected with the cathode of the diode 93; a second end of the first coil section 71a is connected with a first end of the second coil section 71b; and a second end of the second coil section 71b is connected with the anode of the diode 93.

In the present embodiment, the first coil section 71a, the first capacitors 91 and the diode 93 together form a series resonant circuit; and the second coil section 71b and the first capacitors 91 together form a parallel resonant circuit. That is, the first coil section 71a is connected in series with the first capacitors 91; and the second coil section 71b is connected in parallel with the first capacitors 91. Hereinafter, the resonance frequency of the series resonant circuit will be referred to as the first resonance frequency f1; and the resonance frequency of the parallel resonant circuit will be referred to as the second resonance frequency f2. The first and second resonance frequencies f1 and f2 can be respectively expressed by the following equations (1) and (2), where L1 is the inductance of the first coil section 71a, L2 is the inductance of the second coil section 71b, and C is the capacitance of the first capacitors 91. $f 1 = 1 / \left(2π√\left(L1\times C\right)\right)$ (1) $f 2 = 1 / \left(2π√\left(L2\times C\right)\right)$ (2)

Upon high-frequency excitation current flowing through the stator coil 52, main magnetic flux, which flows through a magnetic circuit that includes the stator core 51 and the rotor core 61, varies due to high-frequency components. With the variation in the main magnetic flux, voltages are induced respectively in the first and second coil sections 71a and 71b, thereby inducing electric currents respectively in the first and second coil sections 71a and 71b. Moreover, when the voltages induced respectively in the first and second coil sections 71a and 71b are of the same polarity, the electric currents induced respectively in the first and second coil sections 71a and 71b are not cancelled by each other, thus increasing the total electric current induced in the field coil 70. Furthermore, the electric currents induced respectively in the first and second coil sections 71a and 71b are rectified by the diode 93 to flow in one direction, namely the rectification direction. Consequently, field current flows in the field coil 70 in the rectification direction, thereby exciting the field coil 70.

Referring back to FIG. 2, the control apparatus 30 is mainly composed of a microcomputer (corresponding to a computer) which includes a processor and a memory. The control apparatus 30 generates drive signals for turning on/off the switches SUp, SVp, SWp, SUn, SVn and SWn of the inverter 20. Specifically, in order to convert DC power outputted from the DC power source 10 into AC power and supply the resultant AC power to the U-phase, V-phase and W-phase windings 52U, 52V and 52W, the control apparatus 30 generates drive signals for turning on/off the switches SUp, SVp, SWp, SUn, SVn and SWn and outputs the generated drive signals to the gates of the switches SUp, SVp, SWp, SUn, SVn and SWn.

In the present embodiment, the control apparatus 30 turns on/off the switches SUp, SVp, SWp, SUn, SVn and SWn so as to supply resultant current, which is the resultant of fundamental current and high-frequency excitation current, to each of the U-phase, V-phase and W-phase windings 52U, 52V and 52W. The fundamental current is electric current mainly for causing the rotating electric machine 40 to generate torque. On the other hand, the high-frequency excitation current, whose frequency is higher than that of the fundamental current, is electric current mainly for exciting the field coil 70. It should be noted that harmonic current may be used as the high-frequency excitation current. In addition, U-phase, V-phase and W-phase currents, which are the resultant currents flowing respectively through the U-phase, V-phase and W-phase windings 52U, 52V and 52W, are offset in phase from each other by 120° in electrical angle.

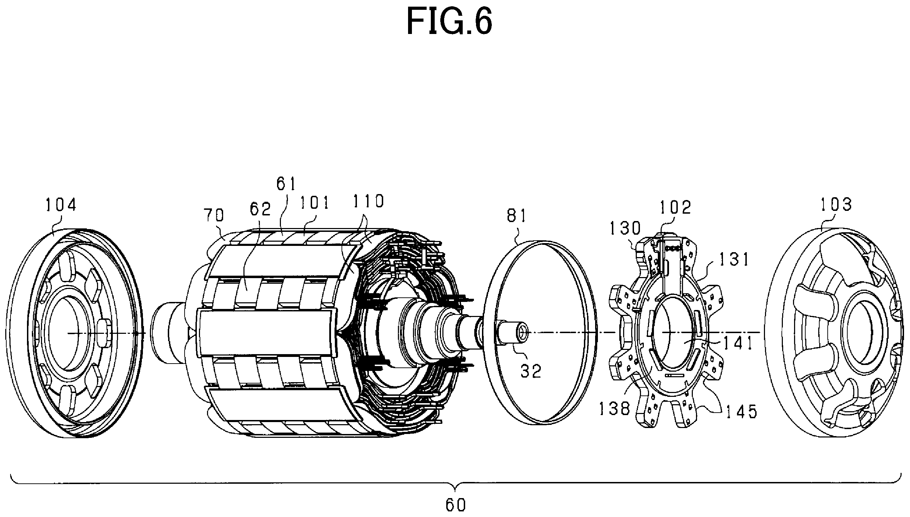

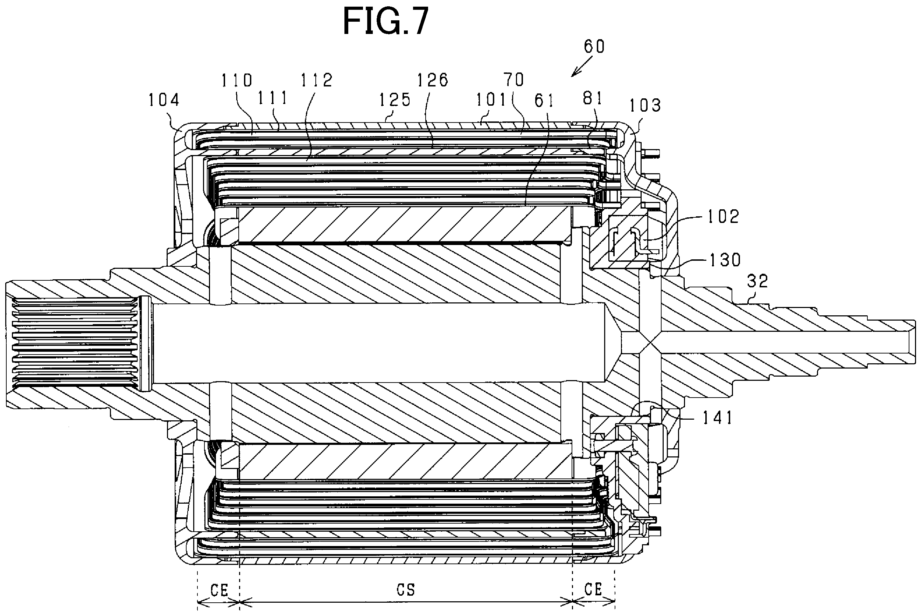

Next, the configuration of the rotor 60 will be described in more detail. FIG. 5 is a perspective view illustrating the overall configuration of the rotor 60. FIG. 6 is an exploded perspective view of the rotor 60. FIG. 7 is a longitudinal cross-sectional view of the rotor 60.

The rotor 60 mainly includes a rotor main body 101, a circuit module 102 provided on a first axial side of the rotor main body 101, and coil end covers 103 and 104 provided as annular members respectively on the first axial side and a second axial side of the rotor main body 101. The rotor main body 101 includes the rotor core 61 and the field coil 70 as described above with reference to FIG. 3, with the rotating shaft 32 fitted in the center hole of the rotor core 61. The field coil 70 is composed of a plurality of coil units 110 arranged in alignment with each other in the circumferential direction. The circuit module 102 is fixed to the rotating shaft 32 that is inserted through a hollow part of the circuit module 102. As shown in FIG. 7, of the field coil 70 (i.e., the coil units 110), that part which radially faces the rotor core 61 constitutes a coil side part CS; and those parts which are located axially outside the rotor core 61 constitute coil end parts CE. The circuit module 102 is provided at a position axially facing one of the coil end parts CE of the field coil 70.

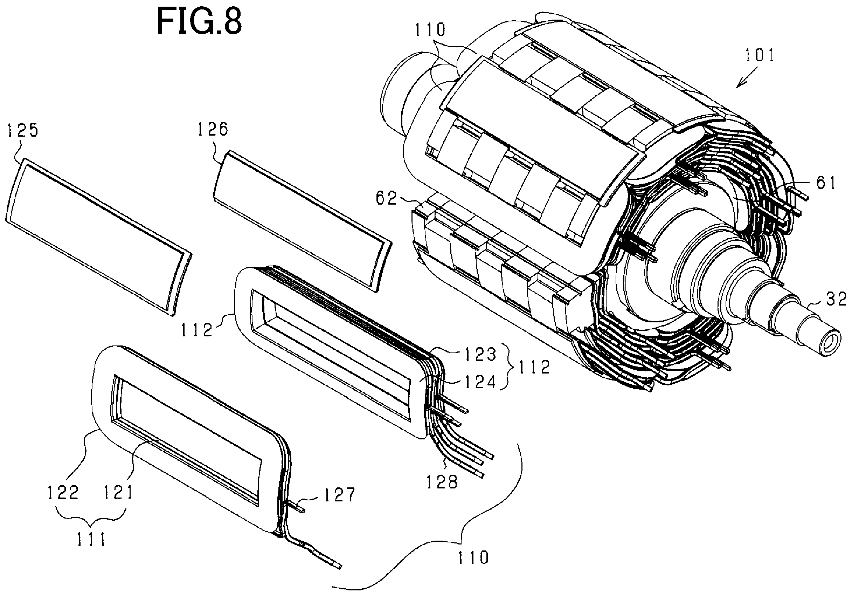

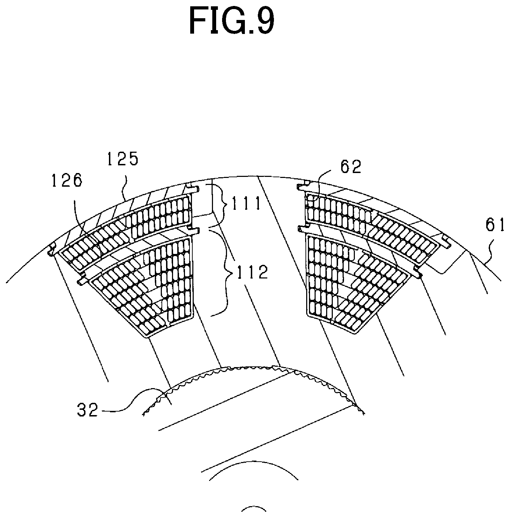

FIG. 8 is a perspective view of the rotor main body 101, showing one of the coil units 110 in a disassembled manner. FIG. 9 is a transverse cross-sectional view of part of the rotor main body 101. The rotor main body 101 has the coil units 110 provided respectively for the magnetic poles of the rotor 60. Each of the coil units 110 is formed in a ring shape whose longitudinal direction coincides with the axial direction. Moreover, each of the coil units 110 is assembled to the rotor core 61, with a corresponding one of the main pole portions 62 of the rotor core 61 inserted into a hollow part thereof.

Each of the coil units 110 includes a first coil module 111 and a second coil module 112 which are located respectively on the radially outer side and the radially inner side when mounted to the corresponding main pole portion 62. The first coil module 111 corresponds to the first coil section 71a, whereas the second coil module 112 corresponds to the second coil section 71b.

The first coil module 111 has: a ring-shaped coil body 121 formed by winding an electrical conductor wire, which is a flat wire, multiply in the circumferential and radial directions of the rotor 60; and a thin plate-shaped insulator 122 provided integrally with the coil body 121. The insulator 122 has portions extending in the circumferential direction and respectively covering radially outer and radially inner peripheral portions of the coil body 121, and portions extending in the radial direction and covering a hollow part of the coil body 121. That is, all of the radially outer peripheral portion, radially inner peripheral portion and hollow part of the coil body 121 are electrically insulated by being covered with the insulator 122.

The second coil module 112 has: a ring-shaped coil body 123 formed by winding an electrical conductor wire, which is a flat wire, multiply in the circumferential and radial directions of the rotor 60; and a thin plate-shaped insulator 124 provided integrally with the coil body 123. The insulator 124 has portions extending in the circumferential direction and respectively covering radially outer and radially inner peripheral portions of the coil body 123, and portions extending in the radial direction and covering a hollow part of the coil body 123. That is, all of the radially outer peripheral portion, radially inner peripheral portion and hollow part of the coil body 123 are electrically insulated by being covered with the insulator 124.

Each of the coil bodies 121 and 123 may be configured as, for example, an α-wound air-core coil. In the present embodiment, as the electrical conductor wires of the coil bodies 121 and 123, flat wires are employed each of which has a substantially rectangular cross section. Moreover, each of the flat wires is constituted of an electrical conductor such as aluminum or the like and an insulating layer covering the electrical conductor. It should be noted that as the electrical conductor wires of the coil bodies 121 and 123, round wires may alternatively be employed each of which has a substantially circular cross section.

As shown in FIG. 9, in the first coil module 111, the electrical conductor wire is wound in two layers in the radial direction; and in the second coil module 112, the electrical conductor wire is wound in six layers in the radial direction. Moreover, the coil modules 111 and 112 have different numbers of windings in the circumferential direction (in other words, different numbers of electrical conductor wires aligned in the circumferential direction); the numbers of windings are greater on the radially outer side than on the radially inner side. Consequently, the space factor of the field coil 70 is improved. It should be noted that ignoring the space factor, all the numbers of windings in the circumferential direction may be set to be equal in the coil bodies 121 and 123 aligned in the radial direction.

Moreover, in the rotor main body 101, between the main pole portions 62 of the rotor core 61, there are provided holding plates 125 and 126 that hold, after the first and second coil modules 111 and 112 of the coil units 110 are assembled to the corresponding main pole portions 62, the assembled state of the coil modules 111 and 112. The holding plates 125 are mounted radially outside the first coil modules 111, whereas the holding plates 126 are mounted between the first coil modules 111 and the second coil modules 112 in the radial direction.

As shown in FIG. 6, the rotor 60 has a coil end ring 81 assembled to axial ends of the coil units 110. As shown in FIG. 7, the coil end ring 81 is located between coil end parts of the first coil modules 111 and coil end parts of the second coil modules 112 in the radial direction, and is sandwiched between the holding plates 126 and the coil end cover 103 in the axial direction.

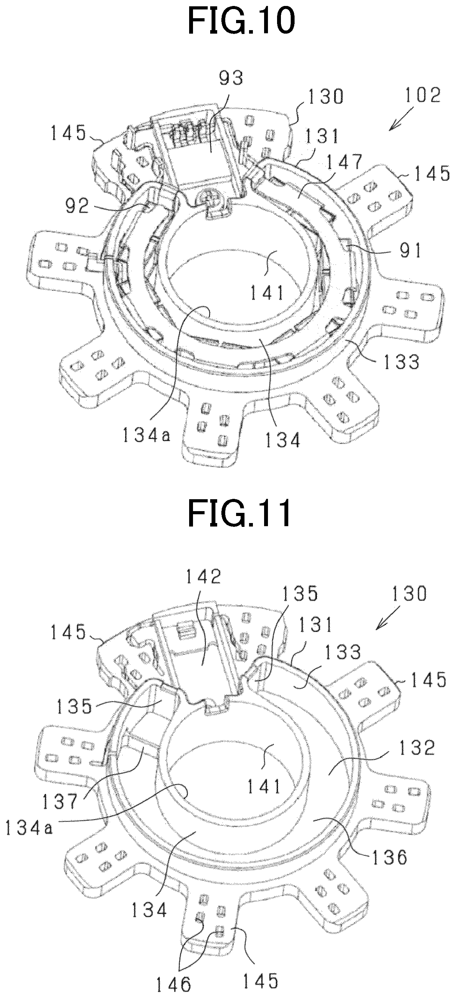

Next, the circuit module 102 will be described. FIG. 10 is a perspective view of the circuit module 102. FIG. 11 is a perspective view of a component holder 130 of the circuit module 102.

The circuit module 102 includes the first capacitors 91, the second capacitor 92, the diode 93, the component holder 130, and a plurality of busbars 147. The component holder 130 is formed of an electrically insulative material, and more particularly, is constituted of a resin molded body formed of a resin material.

As shown in FIG. 11, the component holder 130 includes an annular main body 131. The main body 131 has a bottom plate part 132 extending in the radial direction and having an annular shape, an outer peripheral wall part 133 extending in the axial direction from a radially outer end portion of the bottom plate part 132, and an inner peripheral wall part 134 extending in the axial direction from a radially inner end portion of the bottom plate part 132. The inner peripheral wall part 134 is formed continuously in the circumferential direction into an annular shape, whereas the outer peripheral wall part 133 is formed excluding a part of an entire range in the circumferential direction. Moreover, the main body 131 also has a pair of side wall parts 135 radially extending, respectively at positions corresponding to two circumferential ends of the outer peripheral wall part 133, between the outer peripheral wall part 133 and the inner peripheral wall part 134.

In the main body 131, there is formed, by the bottom plate part 132 and the wall parts 133 to 135, a first accommodation part 136 that is a C-shaped space. The capacitors 91 and 92 are accommodated, as electrical components, in the first accommodation part 136. Moreover, the main body 131 also has a partition part 137 formed so as to axially extend from the bottom plate part 132; the partition part 137 partitions the first accommodation part 136 into an accommodation space of the first capacitors 91 and an accommodation space of the second capacitor 92.

In the main body 131, there is formed a center hole 141 through which the rotating shaft 32 is inserted. Specifically, the center hole 141 is formed by an inner peripheral surface 134a of the inner peripheral wall part 134. The component holder 130 is designed to be assembled onto the rotating shaft 32 with the rotating shaft 32 inserted through the center hole 141 (see FIG. 7).

The inner peripheral wall part 134 of the main body 131 is fixedly fitted to the rotating shaft 32 with a predetermined interference. Specifically, the inner peripheral surface 134a of the inner peripheral wall part 134 is fixedly fitted to the rotating shaft 32 by press fitting. It should be noted that other methods, such as shrink fitting and cooling fitting, may be used instead of press fitting. In addition, in the component holder 130, the inner peripheral surface 134a of the inner peripheral wall part 134 corresponds to a "fixedly-fitted part". The first accommodation part 136 is located radially outside the inner peripheral surface 134a of the inner peripheral wall part 134 so as to surround the inner peripheral surface 134a.

Moreover, the component holder 130 further has a second accommodation part 142 in which the diode 93, which is an electrical component, is accommodated. The second accommodation part 142 is located, at a circumferential position where the outer peripheral wall part 133 is not formed, radially outside the inner peripheral wall part 134. The diode 93 is fixed in the second accommodation part 142 by a fixture such as a bolt. In addition, in the present embodiment, the first accommodation part 136 and the second accommodation part 142 together correspond to a "component accommodation part".

The component holder 130 further has a plurality of coil fixing parts 145 protruding radially outward from the main body 131. In the present embodiment, the number of the coil fixing parts 145 is equal to the number of the main pole portions 62; more particularly, the component holder 130 has eight coil fixing parts 145 formed at equal intervals in the circumferential direction. Each of the coil fixing parts 145 extends radially outward from an axially intermediate position of the outer peripheral wall part 133.

In each of the coil fixing parts 145, there are formed a plurality of through-holes 146 penetrating the coil fixing part 145 in the axial direction. As shown in FIG. 8, in the rotor main body 101, in each of the coil units 110, two conductor wire end portions 127 are led out from an axial end portion of the first coil module 111; and six conductor wire end portions 128 are led out from an axial end portion of the second coil module 112. In addition, in the first coil module 111, the two conductor wire end portions 127 are led out because the first coil section 71a is constituted of a single air-core coil; in contrast, in the second coil module 112, the six conductor wire end portions 128 are led out because the second coil section 71b is constituted of three air-core coils aligned in the radial direction.

Every two circumferentially-adjacent first coil modules 111 are connected in series with each other by inserting a pair of the conductor wire end portions 127 of the two circumferentially-adjacent first coil modules 111 into a corresponding one of the through-holes 146 of the coil fixing parts 145 and connecting them by welding or the like. Moreover, every two circumferentially-adjacent second coil modules 112 are connected in series with each other by inserting each pair of the conductor wire end portions 128 of the two circumferentially-adjacent second coil modules 112 into a corresponding one of the through-holes 146 of the coil fixing parts 145 and connecting them by welding or the like.

In addition, in the coil fixing parts 145 of the component holder 130, the conductor wire end portions 127 and 128 inserted in the corresponding through-holes 146 may be fixed to the coil fixing parts 145 by, for example, a mold resin or an adhesive.

In the first accommodation part 136 of the component holder 130, the first capacitors 91 and the second capacitor 92 are arranged in alignment with each other in the circumferential direction. Moreover, the busbars 147 are connected to the capacitors 91 and 92, so that the capacitors 91 and 92 are electrically connected with the field coil 70 via the busbars 147.

In the circuit module 102, with the configuration in which the component holder 130 is fixedly fitted to the rotating shaft 32 with the predetermined interference, strain may occur around the inner peripheral surface 134a in the component holder 130 due to the interference, thereby causing problems, such as positional displacement and/or damage to the capacitors 91 and the like, to occur.

In view of the above, in the present embodiment, a strain absorption portion is provided in the inner peripheral wall part 134 of the component holder 130 (i.e., provided between the inner peripheral surface 134a of the inner peripheral wall part 134 and the accommodation parts 136 and 142); the strain absorption portion is configured to absorb radial strain caused by the interference. Consequently, with the strain absorption portion, it becomes possible to suppress the influence of strain occurring in the component holder 130 on the capacitors 91 and the like, thereby holding the capacitors 91 and the like in an appropriate state. Hereinafter, the configuration of the strain absorption portion will be described in detail.

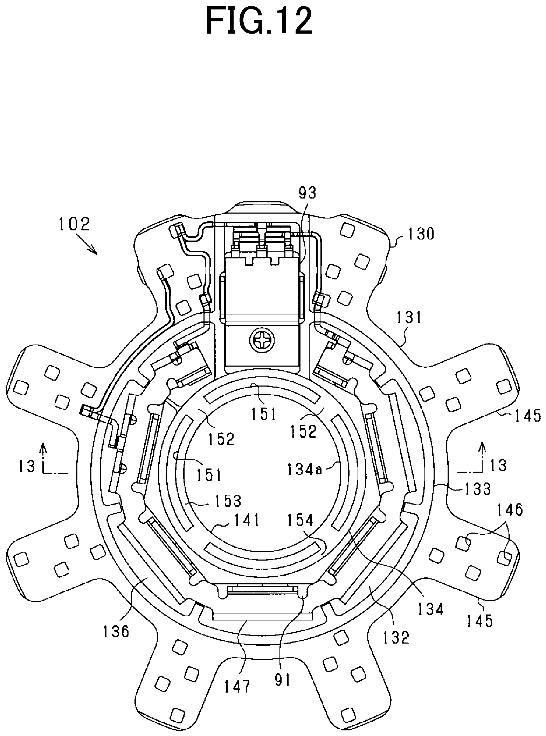

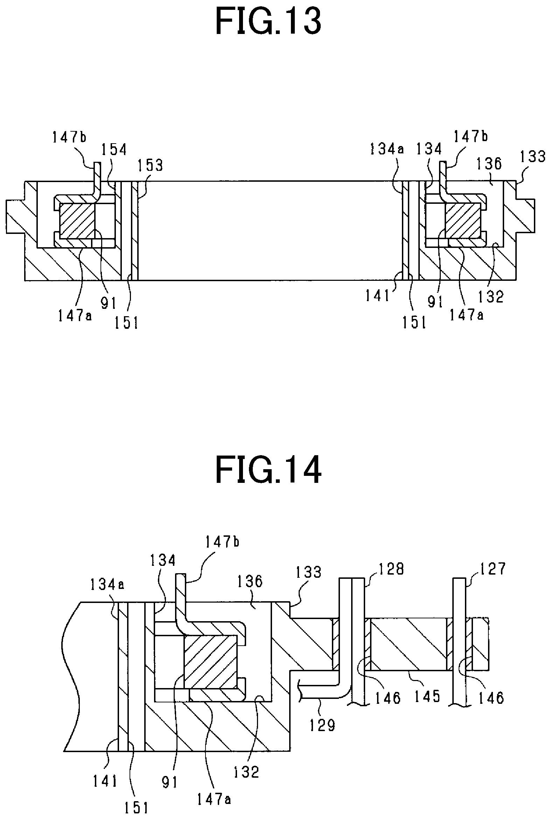

FIG. 12 is a plan view of the circuit module 102. FIG. 13 is a longitudinal cross-sectional view showing a cross section of the circuit module 102 taken along the line 13-13 in FIG. 12.

In the component holder 130, in the inner peripheral wall part 134, there are formed: a plurality of hole portions 151 aligned in the circumferential direction and each penetrating the inner peripheral wall part 134 in the axial direction; and connection portions 152 between circumferentially-adjacent hole portions 151. That is, in the inner peripheral wall part 134, the hole portions 151 and the connection portions 152 are formed alternately in the circumferential direction. Moreover, in the inner peripheral wall part 134, there are also formed: an inner annular portion 153 on the radially inner side (i.e., on the inner peripheral surface 134a side) of the hole portions 151 that are aligned in the circumferential direction; and an outer annular portion 154 on the radially outer side of the hole portions 151 (i.e., on the opposite side of the hole portions 151 to the inner peripheral surface 134a). In addition, in the component holder 130, the hole portions 151 and the connection portions 152, which are formed between the inner peripheral surface 134a of the inner peripheral wall part 134 and the accommodation parts 136 and 142, together correspond to the "strain absorption portion".

Each of the connection portions 152 is narrowed in width in the circumferential direction by being interposed between the hole portions 151 respectively on opposite sides thereof in the circumferential direction, and thus constitutes a low-rigidity connection portion having lower connection rigidity than in the case of no hole portions 151 being formed in the inner peripheral wall part 134.

Each of the hole portions 151 is an elongated hole extending in the circumferential direction and has an arc shape in plan view. All the hole portions 151 have the same length in the circumferential direction and are formed at predetermined intervals in the circumferential direction. Moreover, each of the connection portions 152 is formed so as to radially extend between the inner annular portion 153 and the outer annular portion 154. The width of each of the connection portions 152 in the circumferential direction is set to be less than the length of each of the hole portions 151 in the circumferential direction. It should be noted that the width of each of the connection portions 152 in the circumferential direction may alternatively be set to be equal to the length of each of the hole portions 151 in the circumferential direction, or be greater than the length of each of the hole portions 151 in the circumferential direction. It also should be noted that each of the hole portions 151 may not be an elongated hole. In addition, it also should be noted that the number of the hole portions 151 and the number of the connection portions 152 in the component holder 130 are not limited to those shown in the figures and may be changed as appropriate.

With the configuration of the component holder 130 shown in FIGS. 12 and 13, when strain occurs in the radial direction in the component holder 130 due to press fitting, the strain will be absorbed by the hole portions 151 and the connection portions 152 that are arranged alternately in the circumferential direction. Consequently, transmission of the strain from the inner peripheral surface 134a side (i.e., the fixedly-fitted part side) to the side of the capacitors 91 and the like in the component holder 130 can be suppressed, thereby making it possible to appropriately protect the electrical components such as the capacitors 91.

In the first accommodation part 136 of the component holder 130, the electrical components such as the capacitors 91 are covered with a resin sealing material. Specifically, as shown in FIG. 6, the resin material is filled into the first accommodation part 136 of the component holder 130, forming a resin molded portion 138. The resin material may be, for example, a thermosetting resin such as an epoxy resin. The capacitors 91 and 92 are embedded within the resin molded portion 138 in the first accommodation part 136. It should be noted that the capacitors 91 and the like only need to be at least partially covered with the resin material in the first accommodation part 136.

The elastic modulus of the resin material forming the resin molded portion 138 is higher than the elastic modulus of the resin material forming the component holder 130. In this case, the strain caused by press fitting will be transmitted to the component holder 130, but it will be difficult for the strain to be transmitted to the electrical components. Consequently, it becomes possible to protect the electrical components.

Moreover, as described above, the component holder 130 has the coil fixing parts 145 formed radially outside the first accommodation part 136; and the conductor wire end portions 127 and 128 axially extending from the field coil 70 are fixed in the through-holes 146 of the coil fixing parts 145. FIG. 14 illustrates the connection structure of the conductor wire end portions 127 and 128 in the coil fixing parts 145.

In FIG. 14, there are shown two through-holes 146 formed in one of the coil fixing parts 145. In one of the two through-holes 146, there are fixed the conductor wire end portions 127; in the other of the two through-holes 146, there are fixed one conductor wire end portion 128 and an end portion of a busbar 129 electrically connected with the conductor wire end portion 128. The busbar 129 may be a relay busbar connecting the conductor wire end portions to the capacitors 91 and 92 and the diode 93. In the component holder 130, in the through-holes 146 of the coil fixing parts 145, there may be fixed only the conductor wire end portions 127 and 128, or only the busbar 129.

With the configuration in which the strain absorption portion is provided in the inner peripheral wall part 134 of the component holder 130 as described above, the component holder 130 may become more susceptible to vibration due to reduction in rigidity at the strain absorption portion. As a countermeasure to the above problem, in the component holder 130, the conductor wire end portions 127 and 128 and the busbar 129 are inserted through the through-holes 146 and fixed to the coil fixing parts 145 on the radially outer side of the first accommodation part 136, i.e., on the opposite radial side of the first accommodation part 136 to the inner peripheral surface 134a (i.e., the fixedly-fitted part). In this case, reduction in vibration can be achieved by the coil fixing on the radially outer side of the first accommodation part 136 in the component holder 130.

Part of the configuration of the component holder 130 shown in FIGS. 12 and 13 may be modified as follows.

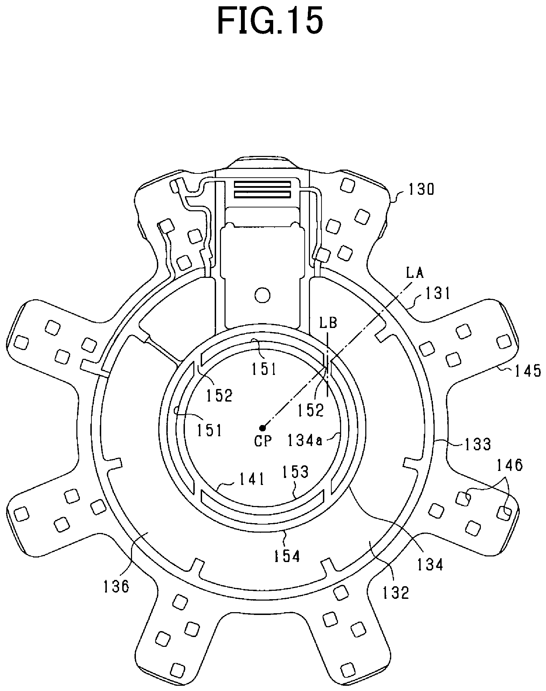

FIG. 15 is a plan view of a component holder 130 according to a modification. As shown in FIG. 15, in this modification, each of the connection portions 152 is inclined with respect to a radial line LA extending straight in the radial direction from the rotation center of the rotor 60 (i.e., from the center point CP of the rotating shaft 32) in a plan view of the component holder 130. Specifically, in each of the connection portions 152, a center line LB of the connection portion 152 in plan view extends straight between the inner annular portion 153 and the outer annular portion 154 of the inner peripheral wall part 134, and is inclined with respect to the radial line LA. Moreover, all of the connection portions 152 aligned in the circumferential direction are inclined toward the same side in the circumferential direction. With the configuration in which each of the connection portions 152 extends in a direction inclined with respect to the radial line LA, the effect of absorbing radial strain can be enhanced. In addition, the connection portions 152 may include those having different inclination directions; for example, the inclination directions of the connection portions 152 may be alternately different in the circumferential direction.

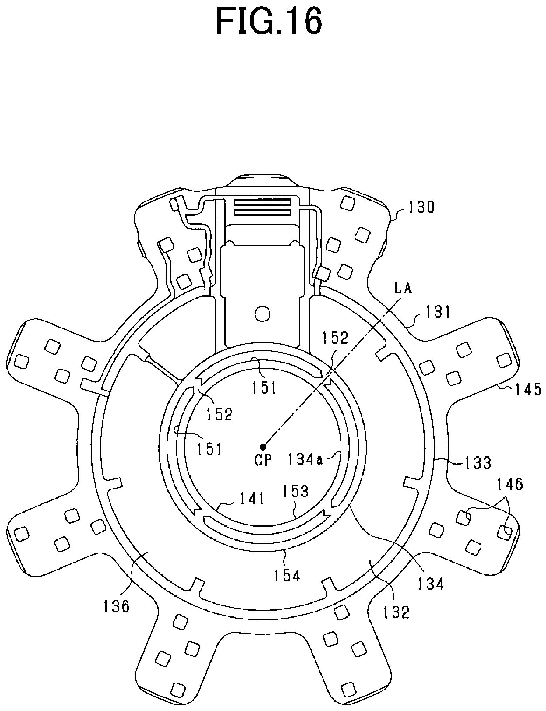

In a modification shown in FIG. 16, each of the connection portions 152 has a bent shape in a plan view of the component holder 130. Specifically, each of the connection portions 152 has two inclined portions inclined respectively toward opposite sides with respect to the radial line LA between the inner annular portion 153 and the outer annular portion 154 of the inner peripheral wall part 134. That is, each of the connection portions 152 is bent into a substantially L-shape. In addition, the bending directions of the connection portions 152 may be all the same in the circumferential direction, or may include those different in the circumferential direction.

With the connection portions 152 formed in the bent shape, the effect of absorbing radial strain can be enhanced. Moreover, with the configuration in which the connection portions 152 have the bent shape, it becomes possible to suppress occurrence of rotation in the circumferential direction on the radially outer side of the connection portions 152 as compared with the configuration in which the connection portions 152 have a straight inclined shape (i.e., the configuration shown in FIG. 15).

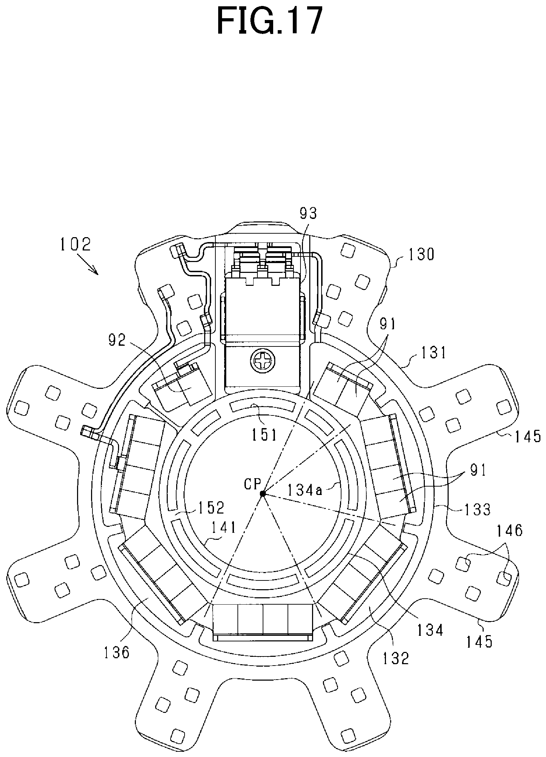

FIG. 17 is another plan view of the circuit module 102. It should be noted that: FIG. 17 is a diagram showing the circuit module 102 shown in FIG. 12 with the busbars 147 on the near side of the drawing sheet removed; and in FIG. 7, there is shown the circumferential arrangement of the capacitors 91 and 92 and the diode 93 which are the electrical components of the circuit module 102.

As shown in FIG. 17, the electrical components (i.e., the capacitors 91 and 92 and the diode 93) are accommodated in alignment with each other in the circumferential direction in the accommodation parts 136 and 142. Moreover, in the accommodation parts 136 and 142, presence regions where the electrical components are present and absence regions where the electrical components are absent are arranged alternately in the circumferential direction. On the other hand, with the configuration in which the hole portions 151 and the connection portions 152 are formed alternately in the circumferential direction in the inner peripheral wall part 134 of the component holder 130, when strain occurs due to the interference, transmission of the strain can be suppressed; however, part of the strain may still be transmitted in the radial direction. In this case, there is a difference between the hole portions 151 and the connection portions 152 in the degree of transmission of the strain in the radial direction. Specifically, the degree of transmission of the strain is higher at the connection portions 152 than at the hole portions 151.

In consideration of the above, as shown in FIG. 17, in the component holder 130, the connection portions 152 are formed at positions corresponding to the absence regions where the electrical components are absent. Consequently, it becomes possible to further suppress the influence of the strain on the electrical components.

Other configurations of the strain absorption portion in the component holder 130 will be described below. In particular, the changes to the above-described configuration will be described below.

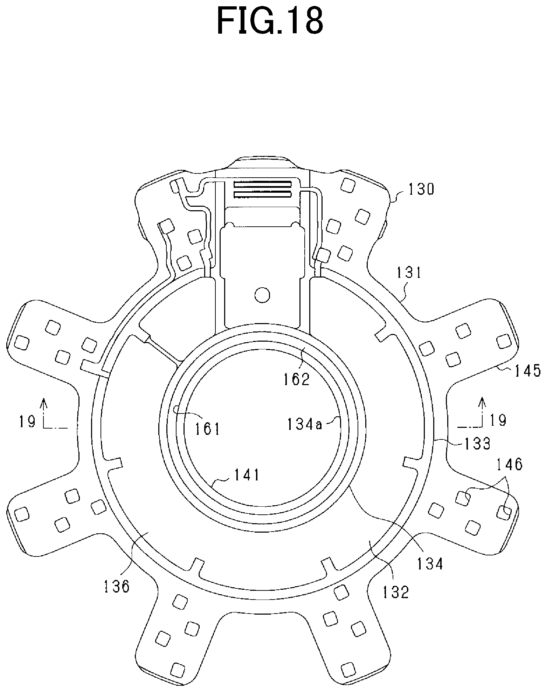

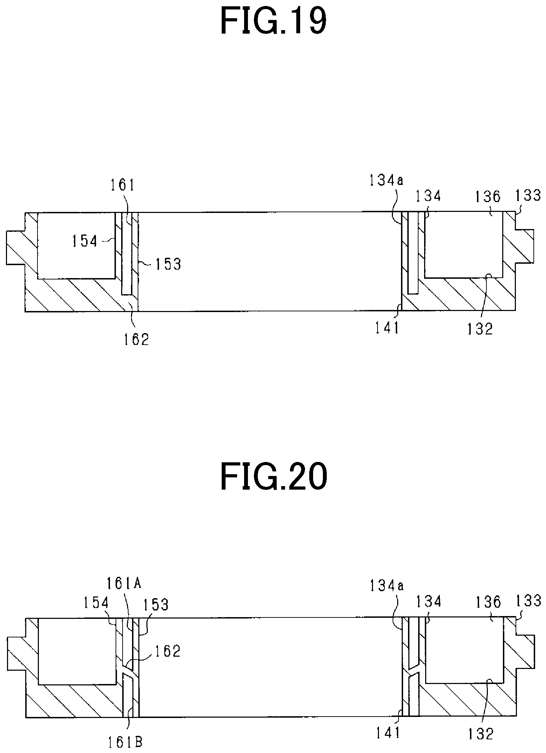

FIG. 18 is a plan view of a component holder 130 according to a modification. FIG. 19 is a longitudinal cross-sectional view showing a cross section of the component holder 130 taken along the line 19-19 in FIG. 18.

As shown in FIGS. 18 and 19, in this modification, in the inner peripheral wall part 134 of the component holder 130, there is formed an annular groove portion 161 that opens on one of two axial end surfaces of the component holder 130 and extends in the circumferential direction. Moreover, in the inner peripheral wall part 134, there is also formed a thin-walled portion 162 that is thinned in the axial direction by the annular groove portion 161. More specifically, the annular groove portion 161 opens on that one of the two axial end surfaces of the component holder 130 which is on the opposite side to the bottom plate part 132 (i.e., on the upper side in FIG. 19). Consequently, in the component holder 130, there is formed the thin-walled portion 162 at a position continuous with the bottom plate part 132 in the radial direction. The thin-walled portion 162 is preferably thinner than the bottom plate part 132. In this modification, the annular groove portion 161 and the thin-walled portion 162 together correspond to the "strain absorption portion". The thin-walled portion 162 is a portion which is thinned in the axial direction by the annular groove portion 161. The thin-walled portion 162 constitutes a low-rigidity connection portion having lower connection rigidity than in the case of no annular groove portion 161 being formed in the inner peripheral wall part 134.

With the annular groove portion 161 formed in the inner peripheral wall part 134 of the component holder 130, the rigidity of the thin-walled portion 162, which is formed by the annular groove portion 161, becomes low. Consequently, strain caused by the press fitting of the inner peripheral wall part 134 can be suitably absorbed by the thin-walled portion 162. Moreover, with the configuration of the component holder 130 shown in FIGS. 18 and 19, it is possible to suppress decrease in the circumferential rigidity at the strain absorption portion and withstand loads caused by rotational fluctuations, as compared with the configuration in which void holes (i.e., the hole portions) are formed between the inner peripheral surface 134a (i.e., the fixedly-fitted part) and the accommodation parts 136 and 142.

In the configuration of the component holder 130 shown in FIG. 19, the annular groove portion 161 is formed so as to open only on that one of the two axial end surfaces of the inner peripheral wall part 134 which is on the opposite side to the bottom plate part 132. However, this configuration may be modified such that the annular groove portion 161 opens only on that one of the two axial end surfaces of the inner peripheral wall part 134 which is on the bottom plate part 132 side. Alternatively, the annular groove portion 161 may be formed so as to open on both the axial end surfaces of the inner peripheral wall part 134.

In a modification shown in FIG. 20, annular groove portions 161A and 161B are formed in the inner peripheral wall part 134 so as to open respectively on the two axial end surfaces of the inner peripheral wall part 134; and a thin-walled portion 162 is formed between the annular groove portions 161A and 161B in the axial direction. Moreover, the thin-walled portion 162 is formed so as to extend in a direction inclined with respect to a direction perpendicular to the axial direction.

In this case, the thin-walled portion 162 has low rigidity and is inclined with respect to the direction perpendicular to the axial direction, so that compressive deformation thereof in the radial direction is facilitated. Consequently, strain caused by the press fitting of the inner peripheral wall part 134 can be suitably absorbed by the thin-walled portion 162.

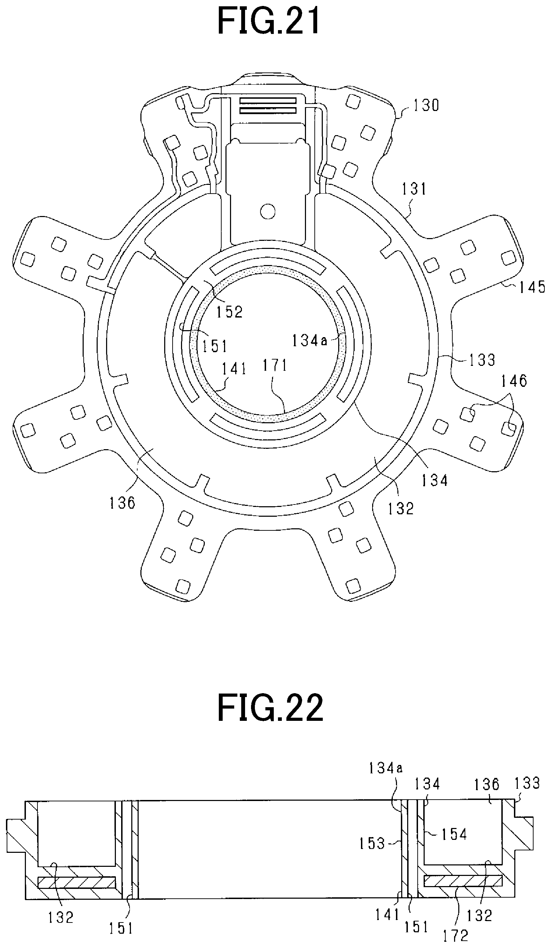

In a modification shown in FIG. 21, in the component holder 130 that is constituted of a resin molded body, a metal ring body 171, which has higher rigidity than the resin material, is insert-molded on the rotating shaft 32 side of the strain absorption portion (e.g., the connection portions 152). The ring body 171 may be implemented by, for example, a tubular body formed of aluminum. In this modification, the ring body 171 constitutes the fixedly-fitted part in the component holder 130. That is, the ring body 171 is fixedly fitted to the rotating shaft 32 with an interference. In this case, with the component holder 130 constituted of the resin molded body formed of a resin having a lower modulus of longitudinal elasticity (or Young's modulus) than the ring body 171, transmission of strain, which is caused by the interference, to the resin part in the component holder 130 can be suppressed, thereby suppressing occurrence of strain in the resin part in the component holder 130.

As a measure to reduce vibration in the configuration in which the strain absorption portion is provided in the component holder 130, a metal reinforcement member may be provided in the vicinity of the accommodation parts 136 and 142 of the component holder 130. Specifically, as shown in FIG. 22, a reinforcement member 172, which extends in an annular shape around the rotating shaft 32, may be integrally provided in a region of the component holder 130 which surrounds the first accommodation part 136. The reinforcement member 172 may be implemented by, for example, a metal plate formed of aluminum or the like. The reinforcement member 172 is embedded in the bottom plate part 132 with plate surfaces thereof facing in the axial direction. In this case, the region of the component holder 130 which surrounds the first accommodation part 136 is reinforced against vibration, thereby suppressing the influence of vibration on the electrical components.

Alternatively, as the configuration of metal-reinforcing in the vicinity of the first accommodation part 136 of the component holder 130, the outer peripheral wall part 133 may be reinforced with a metal member, or the outer annular portion 154, which is located radially outside the hole portions 151 or the annular groove portion 161 in the inner peripheral wall part 134, may be reinforced with a metal member.

In the configuration in which the capacitors 91 and 92 and the diode 93 (i.e., the electrical components) are accommodated in alignment with each other in the circumferential direction in the component holder 130, the degree of influence of the strain caused by the interference may differ between the capacitors 91 and 92 and the diode 93. In consideration of the above, the component holder 130 may be configured so that the degree of strain absorption in the strain absorption portion differs between circumferential positions corresponding to the capacitors 91 and 92 and a circumferential position corresponding to the diode 93.

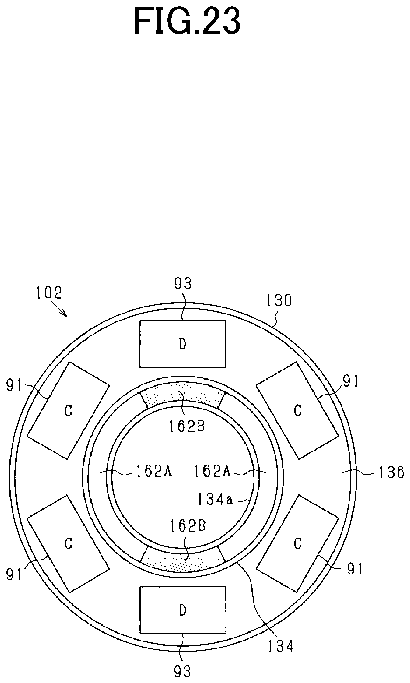

Specifically, a configuration as shown in FIG. 23 may be employed. FIG. 23 schematically illustrates the configuration of a circuit module 102 according to a modification. As shown in FIG. 23, in this modification, an annular component accommodation part 136 is provided in the component holder 130; and four capacitors 91 and two diodes 93 are arranged in alignment with each other in the circumferential direction in the component accommodation part 136. For example, the two diodes 93 may be arranged respectively on opposite sides (more specifically, 180° opposite sides) of the rotor center point.

Moreover, of thin-walled portions 162 provided in an annular shape as the strain absorption portion, thin-walled portions 162A are provided at circumferential positions corresponding to the capacitors 91, i.e., at positions radially inside the capacitors 91; and thin-walled portions 162B are provided at circumferential positions corresponding to the diodes 93, i.e., at positions radially inside the diodes 93. The thin-walled portions 162A and 162B have different axial thicknesses such that the thickness T1 of the thin-walled portions 162A is less than the thickness T2 of the thin-walled portions 162B. In this case, the degree of strain absorption is higher at the thin-walled portions 162A than at the thin-walled portions 162B; thus, the influence of the strain is suppressed preferentially at the capacitors 91. Moreover, the strength of the thin-walled portions 162B can be improved. It should be noted that the thickness T1 of the thin-walled portions 162A may alternatively be set to be greater than the thickness T2 of the thin-walled portions 162B.

With the configuration of the circuit module 102 shown in FIG. 23, it is possible to appropriately suppress the influence of the strain on the electrical components while imparting appropriate strength to the strain absorption portion of the component holder 130.

In FIG. 23, a configuration may alternatively be employed in which the hole portions 151 and the connection portions 152 are provided as the strain absorption portion. In this configuration, the circumferential widths of the connection portions 152 may be set to be different between positions corresponding to the capacitors 91 and positions corresponding to the diodes 93. For example, the circumferential widths of the connection portions 152 may be set to be relatively small at positions corresponding to the capacitors 91 and relatively large at positions corresponding to the diodes 93. It should be noted that the circumferential widths of the connection portions 152 may alternatively be set to be relatively small at positions corresponding to the diodes 93 and relatively large at positions corresponding to the capacitors 91.

The configurations shown in the above-described figures may be implemented in appropriate combinations. For example, the configuration in which the hole portions 151 and the connection portions 152 are provided as the strain absorption portion in the inner peripheral wall part 134 (see FIGS. 12, 13 and 15 to 17) may be combined with the configuration in which the annular groove portion 161 and the thin-walled portion 162 are provided as the strain absorption portion in the inner peripheral wall part 134 (see FIGS. 18 to 20). Specifically, as shown in FIGS. 18 to 20, the thin-walled portion 162 may be formed by the annular groove portion 161 that opens on at least one of the two axial end surfaces of the component holder 130; and the hole portions 151 penetrating in the axial direction may be formed in the thin-walled portion 162 extending in the circumferential direction. Moreover, the hole portions 151 may be formed in the thin-walled portion 162 in any of the fashions shown in FIGS. 12 and 15 to 17. In this case, the connection portions 152 having a smaller axial thickness than the inner annular portion 153 and the outer annular portion 154 are formed as the strain absorption portion in the inner peripheral wall part 134. In addition, in this configuration, it is preferable for the circumferential width of the connection portions 152 to be greater than the circumferential width of the hole portions 151.

### [Other Embodiments]

The above-described embodiment may be further modified, for example, as follows.

In the above-described embodiment, in the rotor 60, the fixedly-fitted part is provided on the inner peripheral side of the component holder 130, and more specifically, is constituted of the inner peripheral surface 134a of the inner peripheral wall part 134; and the inner peripheral surface 134a is fixedly fitted to the rotating shaft 32 by press fitting or the like. However, this configuration may be modified. Specifically, in the rotor 60, the fixedly-fitted part may alternatively be provided on the outer peripheral side of the component holder 130, and more specifically, be constituted of an outer peripheral surface of the outer peripheral wall part 133. For example, the outer peripheral surface of the outer peripheral wall part 133 may be fixedly fitted, by press fitting or the like, to an inner peripheral side of the coil end cover 103 (see FIGS. 5 and 6) that rotates together with the rotating shaft 32. In this case, the coil end cover 103, which is an annular member, corresponds to a "rotating member" to which the fixedly-fitted part of the component holder 130 is fixedly fitted. Moreover, in this case, in the component holder 130, the component accommodation part may be provided radially inside the outer peripheral surface of the outer peripheral wall part 133; and the strain absorption portion may be provided between the outer peripheral surface of the outer peripheral wall part 133 and the component accommodation part.

The field coil 70 may have a configuration different from that described above. For example, the first coil module 111 of the field coil 70 may alternatively be configured such that an electrical conductor wire is continuously wound in two layers in the radial direction, with one end of the electrical conductor wire serving as a winding start end and the other end of the electrical conductor wire serving as a winding finish end. Similarly, the second coil module 112 of the field coil 70 may alternatively be configured such that an electrical conductor wire is continuously wound in six layers in the radial direction, with one end of the electrical conductor wire serving as a winding start end and the other end of the electrical conductor wire serving as a winding finish end.

The first capacitors 91 forming the resonant circuits may be connected in parallel with the first coil section 71a instead of with the second coil section 71b. Moreover, in the resonant circuits, the diode 93 may alternatively have its anode connected to the first coil section 71a-side end of the series connection unit consisting of the first and second coil sections 71a and 71b, and its cathode connected to the second coil section 71b-side end of the series connection unit.

In the rotor 60, the second coil section 71b may alternatively be arranged on the radially outer side (i.e., on the stator 50 side) of the first coil section 71a.

In the stator 50, the stator core 51 may alternatively be a toothless core having no teeth formed therein.

The rotating electric machine 40 is not limited to a rotating electric machine used as an in-vehicle main machine, but may alternatively be, for example, an ISG (Integrated Starter Generator) that serves both as an electric motor and as an electric generator.

The mobile object in which the rotating electric machine system is installed is not limited to a vehicle, but may alternatively be, for example, an aircraft or a ship. Moreover, the rotating electric machine system is not limited to a system installed in a mobile object, but may alternatively be a stationary system.

Technical ideas derived from the above-described embodiments will be described below.

### [First Configuration]

A wound-field rotor (60) comprising:
a rotor core (61);
a field coil (70) wound on the rotor core; and
a circuit module (102) arranged on one axial side of the rotor core and including electrical components connected with the field coil,
wherein:
   the circuit module further includes a component holder (130) that holds the electrical components;
   the component holder has
      a fixedly-fitted part (134a) fixedly fitted, with an interference, to a rotating member that is either a shaft portion (32) of the rotor core or an annular member configured to rotate together with the shaft portion, and
      a component accommodation part (136, 142) located radially outside or radially inside the fixedly-fitted part and accommodating the electrical components therein; and
   between the fixedly-fitted part and the component accommodation part in the component holder, there is provided a strain absorption portion (151, 152, 161, 162) configured to absorb radial strain caused by the interference.

### [Second Configuration]

The wound-field rotor according to the first configuration, wherein the strain absorption portion provided in the component holder comprises a plurality of hole portions (151) aligned in a circumferential direction and each penetrating the component holder in an axial direction, and a plurality of connection portions (152) each being located between a circumferentially-adjacent pair of the hole portions and extending in a radial direction.

### [Third Configuration]

The wound-field rotor according to the second configuration, wherein each of the connection portions is inclined with respect to a radial line extending straight in the radial direction from a center point of the shaft portion in a plan view of the component holder.

### [Fourth Configuration]

The wound-field rotor according to the second configuration, wherein each of the connection portions has a bent shape in a plan view of the component holder.

### [Fifth Configuration]

The wound-field rotor according to the second configuration, wherein:
in the component accommodation part of the component holder, the electrical components are accommodated in alignment with each other in the circumferential direction;
the component accommodation part includes, in the circumferential direction, presence regions where the electrical components are present and absence regions where the electrical components are absent; and
in the component holder, the connection portions are provided at positions corresponding to the absence regions where the electrical components are absent.

### [Sixth Configuration]

The wound-field rotor according to the first configuration, wherein:
between the fixedly-fitted part and the component accommodation part in the component holder, there is formed an annular groove portion (161) that opens on at least one of two axial end surfaces of the component holder and extends in a circumferential direction; and
the strain absorption portion is constituted of a thin-walled portion (162) that is thinned in an axial direction by the annular groove portion.

### [Seventh Configuration]

The wound-field rotor according to the first configuration, wherein:
between the fixedly-fitted part and the component accommodation part in the component holder, there are formed annular groove portions (161) that open respectively on two axial end surfaces of the component holder and extend in a circumferential direction;
the strain absorption portion is constituted of a thin-walled portion (162) that is formed between the annular groove portions in an axial direction; and
the thin-walled portion extends, between the fixedly-fitted part and the component accommodation part, in a direction inclined with respect to a direction perpendicular to the axial direction.

### [Eighth Configuration]

The wound-field rotor according to any one of the first to seventh configurations, wherein:
the electrical components comprise a capacitor (91, 92) and a diode (93) that are accommodated in alignment with each other in a circumferential direction in the component accommodation part; and
a degree of strain absorption in the strain absorption portion differs between a circumferential position corresponding to the capacitor and a circumferential position corresponding to the diode in the component holder.

### [Ninth Configuration]

The wound-field rotor according to any one of the first to seventh configurations, wherein:
the component holder is constituted of a resin molded body; and
a metal ring body (171) is insert-molded on the rotating member side of the strain absorption portion in the component holder.

### [Tenth Configuration]

The wound-field rotor according to any one of the first to seventh configurations, wherein:
the component holder is constituted of a resin molded body;
the electrical components are at least partially covered with a resin sealing material in the component accommodation part; and
an elastic modulus of the resin sealing material is higher than an elastic modulus of a resin material forming the component holder.

### [Eleventh Configuration]

The wound-field rotor according to any one of the first to seventh configurations, wherein:
the field coil is formed by winding an electrical conductor wire and has a conductor wire end portion (127, 128) extending in an axial direction;
the component holder has a through-hole (146) penetrating the component holder in the axial direction; and
in the component holder, on an opposite radial side of the component accommodation part to the fixedly-fitted part, at least one of the conductor wire end portion and an end portion of a busbar (129) electrically connected with the conductor wire end portion is inserted through the through-hole of the component holder and fixed to the component holder.

### [Twelfth Configuration]

The wound-field rotor according to any one of the first to seventh configurations, wherein a reinforcement part (172), which extends in an annular shape around the shaft portion, is integrally provided in a region of the component holder which surrounds the component accommodation part.

While the present disclosure has been described pursuant to the above embodiments, it should be appreciated that the present disclosure is not limited to the embodiments and the structures. Instead, the present disclosure encompasses various modifications and changes within equivalent ranges. In addition, various combinations and modes are also included in the category and the scope of technical idea of the present disclosure.

## Claims

1. A wound-field rotor (60) comprising:
a rotor core (61);
a field coil (70) wound on the rotor core; and
a circuit module (102) arranged on one axial side of the rotor core and including electrical components connected with the field coil,
wherein:
the circuit module further includes a component holder (130) that holds the electrical components;
the component holder has
a fixedly-fitted part (134a) fixedly fitted, with an interference, to a rotating member that is either a shaft portion (32) of the rotor core or an annular member configured to rotate together with the shaft portion, and
a component accommodation part (136, 142) located radially outside or radially inside the fixedly-fitted part and accommodating the electrical components therein; and
between the fixedly-fitted part and the component accommodation part in the component holder, there is provided a strain absorption portion (151, 152, 161, 162) configured to absorb radial strain caused by the interference.

2. The wound-field rotor as set forth in Claim 1, wherein the strain absorption portion provided in the component holder comprises a plurality of hole portions (151) aligned in a circumferential direction and each penetrating the component holder in an axial direction, and a plurality of connection portions (152) each being located between a circumferentially-adjacent pair of the hole portions and extending in a radial direction.

3. The wound-field rotor as set forth in Claim 2, wherein each of the connection portions is inclined with respect to a radial line extending straight in the radial direction from a center point of the shaft portion in a plan view of the component holder.

4. The wound-field rotor as set forth in Claim 2, wherein each of the connection portions has a bent shape in a plan view of the component holder.

5. The wound-field rotor as set forth in Claim 2, wherein:
in the component accommodation part of the component holder, the electrical components are accommodated in alignment with each other in the circumferential direction;
the component accommodation part includes, in the circumferential direction, presence regions where the electrical components are present and absence regions where the electrical components are absent; and
in the component holder, the connection portions are provided at positions corresponding to the absence regions where the electrical components are absent.

6. The wound-field rotor as set forth in Claim 1, wherein:
between the fixedly-fitted part and the component accommodation part in the component holder, there is formed an annular groove portion (161) that opens on at least one of two axial end surfaces of the component holder and extends in a circumferential direction; and
the strain absorption portion is constituted of a thin-walled portion (162) that is thinned in an axial direction by the annular groove portion.

7. The wound-field rotor as set forth in Claim 1, wherein:
between the fixedly-fitted part and the component accommodation part in the component holder, there are formed annular groove portions (161) that open respectively on two axial end surfaces of the component holder and extend in a circumferential direction;
the strain absorption portion is constituted of a thin-walled portion (162) that is formed between the annular groove portions in an axial direction; and
the thin-walled portion extends, between the fixedly-fitted part and the component accommodation part, in a direction inclined with respect to a direction perpendicular to the axial direction.

8. The wound-field rotor as set forth in any one of Claims 1 to 7, wherein:
the electrical components comprise a capacitor (91, 92) and a diode (93) that are accommodated in alignment with each other in a circumferential direction in the component accommodation part; and
a degree of strain absorption in the strain absorption portion differs between a circumferential position corresponding to the capacitor and a circumferential position corresponding to the diode in the component holder.

9. The wound-field rotor as set forth in any one of Claims 1 to 7, wherein:
the component holder is constituted of a resin molded body; and
a metal ring body (171) is insert-molded on the rotating member side of the strain absorption portion in the component holder.

10. The wound-field rotor as set forth in any one of Claims 1 to 7, wherein:
the component holder is constituted of a resin molded body;
the electrical components are at least partially covered with a resin sealing material in the component accommodation part; and
an elastic modulus of the resin sealing material is higher than an elastic modulus of a resin material forming the component holder.

11. The wound-field rotor as set forth in any one of Claims 1 to 7, wherein:
the field coil is formed by winding an electrical conductor wire and has a conductor wire end portion (127, 128) extending in an axial direction;
the component holder has a through-hole (146) penetrating the component holder in the axial direction; and
in the component holder, on an opposite radial side of the component accommodation part to the fixedly-fitted part, at least one of the conductor wire end portion and an end portion of a busbar (129) electrically connected with the conductor wire end portion is inserted through the through-hole of the component holder and fixed to the component holder.

12. The wound-field rotor as set forth in any one of Claims 1 to 7, wherein a reinforcement part (172), which extends in an annular shape around the shaft portion, is integrally provided in a region of the component holder which surrounds the component accommodation part.
